**Europäisches Patentamt**

**European Patent Office**

**Office européen des brevets**

(19)

(11) Numéro de publication : **0 481 831 A1**

## (12) DEMANDE DE BREVET EUROPEEN

(21) Numéro de dépôt : **91402264.5**

(22) Date de dépôt : **19.08.91**

(51) Int. Cl.⁵ : **B60G 21/055**

(30) Priorité : **19.09.90 FR 9011567**

(43) Date de publication de la demande :
**22.04.92 Bulletin 92/17**

(84) Etats contractants désignés :
**DE ES GB IT**

(71) Demandeur : **AUTOMOBILES PEUGEOT**
**75, avenue de la Grande Armée**
**F-75116 Paris (FR)**

(71) Demandeur : **AUTOMOBILES CITROEN**
**62 Boulevard Victor-Hugo**
**F-92200 Neuilly-sur-Seine (FR)**

(72) Inventeur : **Penot, Jean**
**127, Avenue de la République**
**F-94800 Villejuif (FR)**

(74) Mandataire : **Durand, Yves Armand Louis et al**
**CABINET WEINSTEIN 20, Avenue de**
**Friedland**
**F-75008 Paris (FR)**

(54) **Dispositif de fixation d'une barre de torsion sur un bras de suspension de véhicule.**

(57) La présente invention concerne un dispositif de fixation d'une barre de torsion sur un bras de suspension de véhicule.

Ce dispositif permet le serrage d'une extrémité (10) de la barre (1) contre une face (50) du bras de suspension (5) au moyen de vis (21) perpendiculaires à ladite face (50). L'une (10) au moins des extrémités opposées de la barre (1) est aplatie et présente deux parties saillantes (11, 12) comportant chacune un alésage (20) permettant le passage d'une vis de fixation (21) de la barre (1) au bras de suspension (5), et la direction longitudinale de la vis (21), après fixation, est orthogonale à la direction longitudinale de ladite barre (1).

Ce dispositif s'applique notamment à la fixation d'une barre de torsion sur une pièce de véhicule telle un bras de suspension.

Fig.3

EP 0 481 831 A1

L'invention concerne un dispositif de fixation d'une barre de torsion sur une pièce de véhicule automobile telle qu'un bras de suspension.

La fixation des barres de torsion, dites aussi ressorts de torsion, destinées à participer à la suspension d'un véhicule automobile, est assurée généralement par des pièces intermédiaires telles que des brides ou analogues coopérant avec des vis de serrage.

On connaît par exemple un mode de fixation d'une barre anti-dévers sur un bras de suspension, dans lequel deux vis traversent une bride enserrant la barre, de part et d'autre de cette dernière, pour se visser dans le bras de suspension. La bride précitée comporte en outre un moyen permettant d'empêcher la rotation relative de la barre et du bras après fixation. Cette immobilisation en rotation de la barre peut être obtenue par la réalisation d'une bride dont la partie interne destinée à recevoir la barre présente deux méplats parallèles destinés à coopérer avec une extrémité de barre de section rectangulaire. Il a également été proposé de réaliser cette immobilisation relative au moyen d'une dentelure prévue autour de la barre coopérant avec une dentelure correspondante prévue dans la paroi interne de la bride recevant la barre.

Or, ces deux solutions ayant déjà été proposées, n'ont pas donné entière satisfaction. En effet, le choix d'une barre à extrémité de section rectangulaire coopérant avec deux méplats prévus sur la paroi interne de la bride, appliqué à une barre de torsion soumise à des efforts de torsion importants, risquerait de faire apparaître un matage de l'assemblage, entraînant l'apparition d'un jeu entre la barre et la bride rendant la fixation inopérante. Tandis que la solution consistant dans la réalisation d'une dentelure autour de la barre est mal adaptée à la fabrication en grande série, et relativement coûteuse. L'orientation des dentelures est en effet délicate à obtenir et nécessite parfois une réalisation d'un nombre de dents différent aux deux extrémités de la barre.

La présente invention résout ces problèmes en proposant un dispositif de fixation d'une barre de torsion sur une pièce de véhicule automobile, de conception simple et peu coûteuse. L'encombrement de ce dispositif est considérablement réduit, et il peut être utilisé pour fixer des barres fortement contraintes en torsion.

A cet effet, la présente invention a pour objet un dispositif de fixation d'une barre de torsion sur une pièce telle qu'un bras de suspension de véhicule automobile, du genre dans lequel une extrémité de la barre est serrée contre une face de ladite pièce au moyen de vis perpendiculaires à ladite face, ce dispositif étant caractérisé en ce qu'au moins l'une des extrémités opposées de la barre est aplatie et présente deux parties saillantes comportant chacune un alésage permettant le passage d'une vis de fixation de la barre au bras de suspension, la direction longitudinale de ladite vis, après fixation, étant orthogonale à la direction longitudinale de ladite barre.

Selon une réalisation particulière de l'invention, les deux parties saillantes à l'une ou aux deux extrémités de la barre sont identiques et s'étendent de façon symétrique par rapport à la direction longitudinale de la barre.

Suivant une autre caractéristique de l'invention, les parties saillantes précitées forment respectivement deux bossages réunis par une nervure et recevant chacun une vis.

Les parties saillantes précitées de la barre sont obtenues par forgeage.

Mais d'autres avantages et caractéristiques de l'invention apparaîtront mieux dans la description détaillée qui suit et se réfère aux dessins annexés donnés uniquement à titre d'exemple et dans lesquels :

La figure 1 est une vue partielle et de côté d'une barre anti-dévers, fixée sur un bras de suspension de véhicule au moyen du dispositif de fixation de l'invention ;

La figure 2 est une vue en coupe suivant la ligne II-II de la figure 1 ; et

La figure 3 est une vue à plus grande échelle, et de dessus suivant la flèche III de la figure 1, d'une extrémité de la barre anti-dévers.

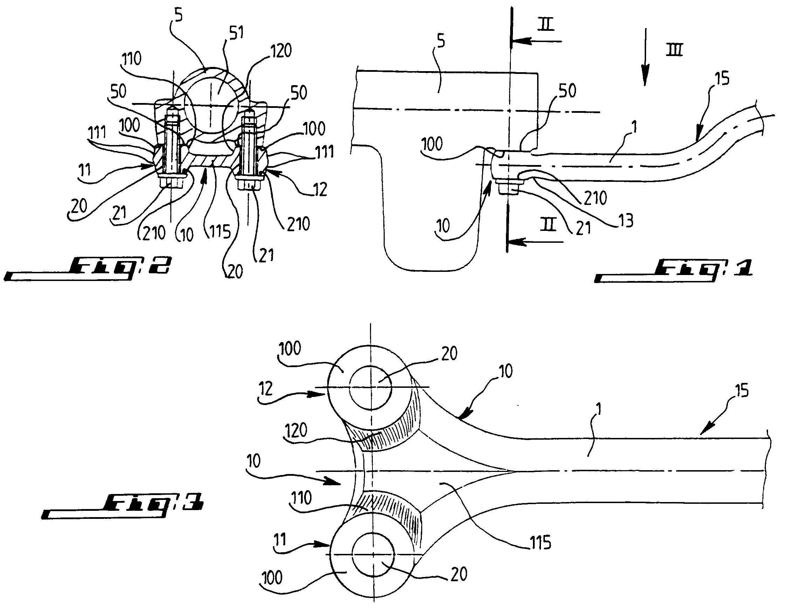

En se reportant aux figures 1 et 2, on voit une barre anti-dévers 1 fixée par l'une 10 de ses extrémités sur un bras de suspension 5 de véhicule. La fixation précitée est réalisée par serrage d'une face 100 de l'extrémité 10 de la barre 1 contre une face 50 du bras de suspension 5, au moyen de deux vis 21. Ces vis 21 traversent la barre 1 perpendiculairement à sa direction longitudinale et à sa face 100, pour se visser dans le bras de suspension 5 de part et d'autre d'un orifice 51 prévu dans le bras 5, pour le passage d'un axe de support (non représenté) dudit bras.

En se reportant plus particulièrement à la figure 2, on voit que l'extrémité 10 de la barre est aplatie et présente deux parties saillantes 11, 12 formant deux bossages 110, 120, reliés par une nervure 115. Chaque bossage 110 comporte un alésage 20 dont l'axe est orthogonal à la direction longitudinale de la barre 1. La section transversale de ces bossages 110, 120 est sensiblement hexagonale, et leurs parois latérales sont formées par les dépouilles 111 se rejoignant au niveau du plan de joint des matrices du moule ayant permis la réalisation de l'extrémité de la barre 1. Les parties inférieures circulaires (visibles sur la figure 3) des bossages 110, 120 sont d'un diamètre correspondant sensiblement à celui des surfaces d'appui 210 des têtes de vis 21. La partie centrale 15 de la barre présentant une section circulaire est reliée à sa partie d'extrémité 10 assurant sa fixation, par un congé 13 (figure 1). En se reportant plus particulièrement à la figure 3, on voit que les surfaces supérieures 100 des bossages 110, 120, destinées à venir en appui contre la face 50 du bras de suspension 5, sont également de forme circulaire. La largeur de l'extrémité 10 de la barre 1, décroît de façon continue en direction de sa partie centrale 15. Ainsi, Il apparaît que la fixation de la barre 1 au bras de suspension 5 par l'intermédiaire du dispositif de l'invention permet de diminuer considérablement les risques d'altération de la fixation, compte-tenu du nombre réduit de pièces mises en oeuvre. Ceci se traduit par une fiabilité accrue de la fixation par rapport à celle obtenue par les dispositifs de l'art antérieur. Ceci est particulièrement appréciable compte-tenu de la précision qui est requise dans la position relative des extrémités de la barre, précision dont la valeur est dictée par les tolérances à observer en hauteur entre le côté gauche et le côté droit du véhicule.

La description qui précède se rapporte à une application du dispositif de fixation de l'inventon à une barre anti-dévers. Dans cette application particulière, les deux extrémités de la barre sont conformées de préférence, de la manière décrite ci-dessus, de façon à former deux extrémités aplaties identiques présentant une symétrie par rapport à l'axe de la barre, et dont les faces d'appui 100 respectives sont aisément réalisées parallèles avec la précision requise susmentionnée.

Et on pourra noter que dans le cas d'une application du dispositif de l'invention à une barre de torsion autre qu'une barre anti-dévers, le dispositif ne sera pas obligatoirement intégré aux deux extrémités de la barre, et que les parties saillantes ne seront pas nécessairement symétriques par rapport à l'axe de la barre.

On a donc réalisé suivant l'invention, un dispositif de fixation d'une barre de torsion telle qu'une barre anti-dévers de véhicule automobile sur une pièce telle qu'un bras de suspension, quine nécessite pas le recours à une pièce intermédiaire telle une bride ou analogue, et grâce auquel une seule pièce forgée intégrée à la barre, associée à des vis de serrage suffisent à réaliser la fonction de fixation requise. Ce qui se traduit par un encombrement réduit, une simplification de la conception entraînant une réduction des coûts de fabrication, et par une simplification de montage, qui peut ainsi avantageusement être automatique.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

**Revendications**

1. Dispositif de fixation d'une barre de torsion sur une pièce telle qu'un bras de suspension de véhicule automobile, du genre dans lequel une extrémité de la barre est serrée contre une face de ladite pièce au moyen de vis perpendiculaires à ladite face, caractérisé en ce qu'au moins l'une (10) des extrémités opposées de la barre (1) est aplatie et présente deux parties saillantes (11, 12) comportant chacune un alésage (20) permettant le passage d'une vis de fixation (21) de la barre (1) au bras de suspension (5), la direction longitudinale de ladite vis (21), après fixation, étant orthogonale à la direction longitudinale de ladite barre (1).

2. Dispositif selon la revendication 1 ou 2, caractérisé en ce que les deux parties saillantes (11, 12) à l'une (10) ou aux deux extrémités de la barre (1) sont identiques et s'étendent de façon symétrique par rapport à la direction longitudinale de la barre (1).

3. Dispositif selon la revendication 1 ou 2, caractérisé en ce que les parties saillantes précitées (11, 12) forment respectivement deux bossages (110, 120) réunis par une nervure (115) et recevant chacun une vis (21).

4. Dispositif selon l'une quelconque des revendications précédentes, caractérisé en ce que les parties saillantes précitées (11, 12) de la barre (1) sont obtenues par forgeage.

Fig. 2

Fig. 1

Fig. 3

EP 0 481 831 A1

**EP 0 481 831 A1**

Office européen
des brevets

# RAPPORT DE RECHERCHE EUROPEENNE

Numero de la demande

EP 91 40 2264

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 794 632 (SCHILBERG) <br> * document en entier * <br> --- | 1,2 | B 60 G 21/055 |
| A | FR-A- 939 941 (FORD) <br> * page 3, lignes 28-80; figures 1,3 * <br> --- | 1-4 | |
| A | US-A-3 198 507 (KOZICKI) <br> * figures * <br> --- | 1,2 | |
| A | DE-A-3 742 869 (ROCKWELL) <br> * figures 5-10 * <br> ----- | 1,4 | |

DOMAINES TECHNIQUES RECHERCHES (Int. Cl.5)

B 60 G
F 16 F

Le présent rapport a été établi pour toutes les revendications

| Lieu de la recherche | Date d'achèvement de la recherche | Examinateur |
|---|---|---|
| BERLIN | 10-12-1991 | KRIEGER P O |

5